# EUROPEAN PATENT SPECIFICATION

(11) **EP 3 514 936 B1**
(45) Date of publication and mention of the grant of the patent: **16.09.2020**
(21) Application number: 18807841.4
(22) Date of filing: 11.11.2018
(51) Int. Cl.: H02M 1/15, H02M 1/42, H02M 7/483, H02M 1/12, H02M 7/10, H02J 3/18, H02J 3/38

(54) **HYBRID DC CONVERTER FOR OFFSHORE WIND FARM**
HYBRIDER GLEICHSPANNUNGSWANDLER FÜR OFFSHORE-WINDPARKS
CONVERTISSEUR CC HYBRIDE DESTINÉ À UN PARC ÉOLIEN EN MER

(30) Priority: 07.12.2017 CN 201711288924
(43) Date of publication of application: 24.07.2019
(73) Proprietor: Shanghai Jiao Tong University, Shanghai 200240 (CN)
(72) Inventor: CAI, Xu, Shanghai 200240 (CN); CHANG, Yiran, Shanghai 200240 (CN)
(74) Representative: Sun, Yiming
(86) International application number: PCT/CN2018/114938
(87) International publication number: WO 2019/109781

(56) References cited:
- EP-A1- 2 945 273
- WO-A1-2016/206547
- CN-A- 102 222 929
- CN-A- 103 532 161
- CN-A- 105 024 569
- CN-A- 105 164 907
- CN-A- 106 972 519
- CN-A- 107 968 587
- CN-A- 108 111 030
- GB-A- 2 427 512
- JP-A- H0 884 476
- CHANG YIRAN ET AL: "Hybrid Topology of a Diode-Rectifier-Based HVDC System for Offshore Wind Farms", IEEE JOURNAL OF EMERGING AND SELECTED TOPICS IN POWER ELECTRONICS, IEEE, PISCATAWAY, NJ, USA, vol. 7, no. 3, 1 September 2019 (2019-09-01), pages 2116-2128, XP011737126, ISSN: 2168-6777, DOI: 10.1109/JESTPE.2018.2881768 [retrieved on 2019-07-30]
- CHANG, YIRAN et al.: "Cost-Effective Hybrid HVDC Converter for Offshore Wind Farms", Proceedings of the CSEE, vol. 38, no. 19, 5 October 2018 (2018-10-05), pages 5821-5828, XP009515471, ISSN: 0258-8013
- NGUYEN, T.H. et al.: "Control of Offshore Wind Farms Based on HVDC", 2012 IEEE Energy Conversion Congress and Exposition (ECCE, 12 November 2012 (2012-11-12), page 3113, XP032467180,

## Description

### TECHNICAL FIELD

The present invention belongs to the field of VSC-HVDC(voltage-source converter based high-voltage direct current) and power electronics technologies in a power system, and relates to a converter topology of offshore wind farm direct current transmission, and in particular, to a hybrid offshore wind farm direct current converter.

In particular the invention relates to a hybrid offshore wind farm direct current transmission converter, comprising: a diode rectifier, wherein an alternating current side of the diode rectifier is connected to a wind farm collection grid, and a direct current side of the diode rectifier is connected to a high-voltage direct current, HVDC, transmission line; and an auxiliary converter, wherein the auxiliary converter is connected to the wind farm collection grid and the HVDC transmission line, in parallel to the diode rectifier, wherein the auxiliary converter comprises: a modular multilevel converter, MMC, wherein an alternating current side of the MMC is connected to the wind farm collection grid via a transformer; and a submodule string, comprising a plurality of half-bridge submodules, wherein one end of the submodule string is connected to the MMC, and the other end is connected to the HVDC transmission line.

### RELATED ART

CN 102 222 929 A discloses a hybrid offshore wind farm direct current transmission converter of the generic type as defined above.

With the rapid development of the VSC-HVDC technology based on modular multilevel converters (MMCs), the MMC uses submodules to form a large-capacity and high-voltage AC/DC converter, has advantages such as low harmonics and low losses, and has become the most attractive converter topology in the direct current transmission technology. However, as the voltage level rises, the quantity of submodules of the MMC is significantly increased. For a direct current transmission system with a voltage level of hundreds of kilovolts, an MMC converter needs to be formed by thousands of submodules, a control system is very complex, and the volume and the weight of the converter are relatively large. Therefore, manufacturing costs of the converter are relatively high. For direct current transmission application of an offshore wind farm, offshore platform construction costs are high, and system costs are further increased.

A diode rectifier has low costs, and does not need a control system. Therefore, the costs, the volume, and the weight of the converter can be significantly reduced, but there is a very large technical challenge to use the diode rectifier. First, the diode rectifier cannot actively establish the voltages of a wind farm collection grid, and the control stragtey of a conventional wind power generation converter cannot be applied. Second, a wind turbine needs to consume electric energy, and the diode rectifier does not have an inversion function and cannot meet a wind farm black-start requirement. In addition, the diode rectifier generates relatively large current harmonics, and cannot provide a reactive power support for a wind farm.

An existing document 1, author: Xu Zheng, Xue Yinglin, and Zhang Zheren. "VSC-HVDC Technology Suitable for Bulk Power Overhead Line Transmission [J]". Proceedings of the CSEE, 2014, 34 (29): 5051-5062. The technology uses a solution of all MMC converters, and the solution needs relatively large quantities of modules and IGBT devices. Therefore, system costs are relatively high.

An existing document 2, author: Ramon B, Salvador A, Johel R, et al. "Distributed Voltage and Frequency Control of offshore Wind Farms Connected with a Diode-Based HVDC Link [J]". IEEE Transactions on Power Electronics, 2010, 25 (12): 2095-3105. The technology uses a solution of a diode rectifier, but the diode rectifier cannot actively establish voltages of a wind farm collection grid. Therefore, a special control strategy of a wind power generation converter needs to be designed.

Document CN 102 222 929 A discloses a DC power transmission system wherein both ends of a diode rectifier are connected in parallel with low-power modularized multilevel converters; an AC (Alternate Current) end of the diode rectifier is connected with a sender system; a DC end of the diode rectifier is connected with a sender of a DC power transmission circuit; AC ends of the low-power modularized multilevel converters are connected with the sender system; DC ends of the low-power modularized multilevel converters are connected with the sender of the DC power transmission circuit; a DC end of a full-power modularized multilevel converter is connected with a receiver of the DC power transmission circuit; and an AC end of the full-power modularized multilevel converter is connected with a receiver system. The low-power modularized multilevel converters are used as active power filters to filter out a harmonic current generated by the diode rectifier, provide start power (such as service power) for the sender system when the sender system loses power, provide an AC voltage resource for the sender system.

Document CN 103 532 161 A discloses a topological structure of a hybrid direct-current power transmission system based on an auxiliary power supply and a starting method. The topological structure is specific to a dual-end large power grid hybrid direct-current system. A VSC (Voltage Source Converter) is adopted on a rectifying side; an LCC converter is adopted on an inversion side; a starting power supply constructed by an uncontrolled rectifying device is connected in parallel to the middle of a direct-current circuit.

Document GB 2 427 512 A discloses an electric power converter combination for converting AC power from a main AC supply network to DC power to supply a DC load, the converter combination comprising a phase controlled thyristor supply bridge rectifier and an auxiliary PWM converter connected across a DC output filter of the thyristor supply bridge, the auxiliary PWM converter also being connected to a power supply comprising either the main AC supply network, an AC supply independent of the main AC supply network, or a low voltage DC supply.

### SUMMARY

An objective of the present invention is to provide a hybrid offshore wind farm direct current converter that can meet a wind farm black-start requirement, can compensate current harmonics, provides reactive power compensation for a wind farm, and has low system costs.

To resolve the foregoing technical problem, the present invention provides a hybrid offshore wind farm direct current transmission converter, comprising: a diode rectifier, wherein an alternating current side of the diode rectifier is connected to a wind farm collection grid, and a direct current side of the diode rectifier is connected to a high-voltage direct current, HVDC, transmission line; and an auxiliary converter, wherein the auxiliary converter is connected to the wind farm collection grid and the HVDC transmission line, in parallel to the diode rectifier, wherein the auxiliary converter comprises: a modular multilevel converter, MMC, wherein an alternating current side of the MMC is connected to the wind farm collection grid via a transformer; and a submodule string, comprising a plurality of half-bridge submodules, wherein one end of the submodule string is connected to the MMC, and the other end is connected to the HVDC transmission line. In this hybrid offshore wind farm direct current transmission converter the other end is connected to the HVDC transmission line via a midpoint of an LC filter circuit, wherein the filter circuit is formed by a filter inductor and a filter capacitor, and the filter circuit is mounted on a direct current side if the auxiliary converter to prevent a high-frequency circuit inside the auxiliary converter from entering the HVDC transmission line, and wherein the filter capacitor is connected between an input end positive electrode and an input end negative electrode of the auxiliary converter

Preferably, a quantity of half-bridge submodules of each bridge arm in the MMC is 8, an inductance of each bridge arm in the MMC is 1 mH, a rated value of a direct current output voltage of the MMC is 16 kV, and a rated value of an alternating current output voltage of the MMC is 6 kV.

Preferably, the submodule string includes 45 half-bridge submodules.

Preferably, a rated voltage of the half-bridge submodule is 2 kV.

Preferably, a rated value of a direct current output voltage of the submodule string is 84 kV.

Preferably, the filter inductor is 50 mH, and the filter capacitor is 150 µF.

Preferably, a switch frequency of an insulated gate bipolar transistor of the submodule string is 200 Hz, and a switch frequency of an insulated gate bipolar transistor of the MMC is 1000 Hz.

Preferably, the diode rectifier is a 12-pulse diode rectifier, a 24-pulse diode rectifier, or a multiplex diode rectifier.

Compared with the prior art, the present invention has the following beneficial effects:
1) Compared with an MMC converter having a full voltage level, the present invention can significantly reduce quantities of submodules and IGBTs, thereby reducing system costs.
2) A wind farm intranet voltage can be actively established in a wind farm start-up phase, start-up power of a wind farm can be provided, and a black-start of the wind farm can be achieved.
3) A small-capacity low-voltage MMC in an auxiliary converter can provide reactive compensation and harmonic current compensation in a stable sending phase of the wind farm, thereby improving performance based on a diode rectifier system.

### BRIEF DESCRIPTION OF THE DRAWINGS

FIG. 1 is a principle diagram of a hybrid offshore wind farm direct current converter according to the present invention;
FIG. 2 is a schematic diagram of a wind farm output current of the hybrid offshore wind farm direct current converter according to the present invention;
FIG. 3 is a schematic diagram of an alternating current side current of an auxiliary converter of the hybrid offshore wind farm direct current converter according to the present invention; and
FIG. 4 is a schematic diagram of an alternating current side current of a diode rectifier of the hybrid offshore wind farm direct current converter according to the present invention.

In the figures:

| | | |
|---|---|---|
| 1-Half-bridge submodule | 2-Filter inductor | 3-Filter capacitor |

### DETAILED DESCRIPTION

To fully describe the technical solutions implemented and used in the present invention for resolving the technical problem, and the following describes the present invention with reference to an embodiment and the accompanying drawings. However, the technical solutions of the present invention, and implementations and protection scope of the technical solutions are not limited thereto.

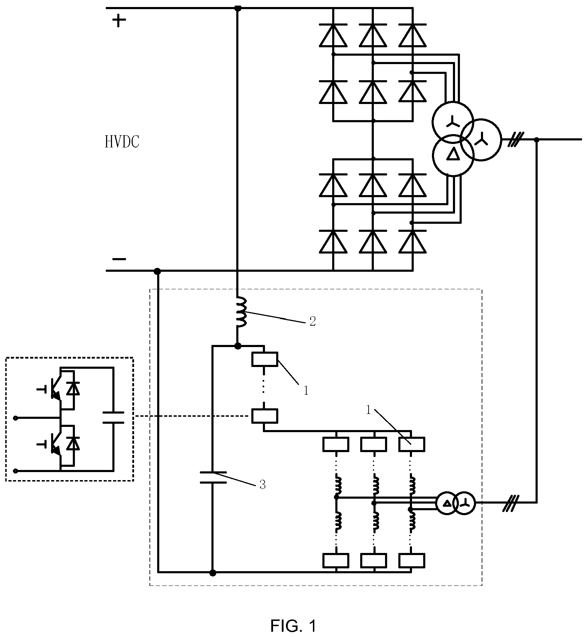

The hybrid offshore wind farm direct current converter of the present invention is formed by two large parts:
A first part is a diode rectifier and a connected transformer. In FIG. 1, a 12-pulse diode rectifier is used, and a 24-pulse diode rectifier or a higher multiplex diode rectifier may also be used. An alternating current side of the diode rectifier is connected to a wind farm intranet, and a direct current side of the diode rectifier is connected to a high-voltage direct current (HVDC) transmission line.

A second part is an auxiliary converter, and the auxiliary converter is formed by three parts:
1. A small-capacity low-voltage MMC. The part is the same as a structure of a conventional MMC converter, and is formed by using half-bridge submodules 1, but has a relatively small voltage level and power capacity. The alternating current side of the small-capacity low-voltage MMC is connected to a wind farm collection grid via a transformer, and the direct current side is connected to an HVDC transmission line via a submodule string and a filter circuit.
2. A submodule string. The submodule string is formed by connecting a series of half-bridge submodules 1 in series, where one end is connected to the small-capacity low-voltage MMC, and the other end is connected to the HVDC transmission line via the filter circuit.
3. The filter circuit. The filter circuit is formed by a filter inductor 2 and a filter capacitor 3, and the filter circuit is mounted on a direct current side of an auxiliary converter, to prevent a high-frequency current inside the converter from entering the HVDC transmission line. The alternating current side of the auxiliary converter is connected to the wind farm collection grid in parallel with the transformer of the diode rectifier, and the direct current side is connected to the HVDC transmission line via the submodule string and the filter circuit.

To implement a black-start of a wind farm and normal power generation, running of the converter is divided into three phases: 1. A wind farm start-up phase, where the auxiliary converter establishes a wind farm collection grid alternating current voltage, and controls the wind farm collection grid voltage to be lower than a rectification threshold voltage of the diode rectifier. In this case, the diode rectifier does not work, start-up power of the wind farm is provided by the auxiliary converter, and wind turbines starts to connect to the wind farm collection grid based on a conventional control strategy. 2. The wind turbines begins to generate electricity, the wind farm is converted from a load to a power supply, and the output power continuously increases. After the wind farm completes start-up, the auxiliary converter raises the wind farm collection grid voltages to reach the rectification threshold of the diode rectifier, so that wind farm output power is transferred from the auxiliary converter to the diode rectifier, and the voltage amplitude on the alternating current side of the auxiliary converter is controlled, so that the auxiliary converter remains a zero-active-power running state. 3. The wind farm enters a stable electricity generation phase, and all active power is transformed by the diode rectifier. In this case, the auxiliary converter is in a zero-active-power running state, a small-capacity low-voltage MMC in the auxiliary converter has functions of compensating reactive power inside the wind farm and compensating a current harmonic.

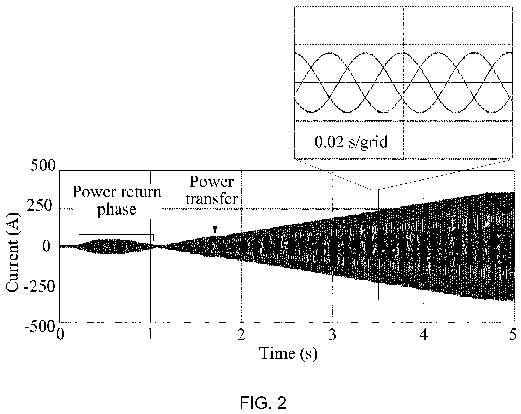

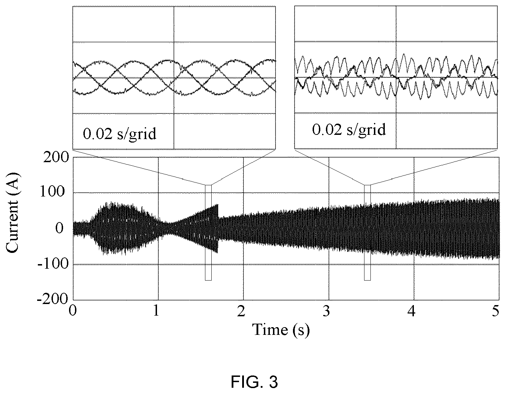

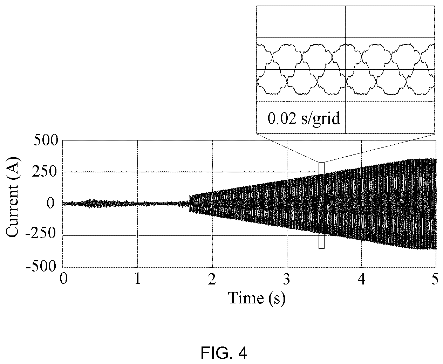

For a 160 MW offshore wind farm designed as a direct current transmission converter station shown in FIG. 1, an HVDC line voltage is 100 kV, a rated voltage of the half-bridge submodule 1 of the auxiliary converter is 2 kV, a quantity of half-bridge submodules 1 of the submodule string is 45, a rated value of a direct current output voltage of the submodule string is 84 kV, a quantity of half-bridge submodules 1 of each bridge arm in the small-capacity low-voltage MMC is 8, an inductance of each bridge arm in the small-capacity low-voltage MMC is 1 mH, a rated value of a direct current output voltage of the small-capacity low-voltage MMC is 16 kV, a rated value of an alternating current output voltage of the small-capacity low-voltage MMC is 6 kV, the filter inductor 2 and the filter capacitor 3 of the auxiliary converter are respectively 50 mH and 150 µF, an IGBT switch frequency of the submodule string is 200 Hz, a switch frequency of an IGBT of the small-capacity low-voltage MMC is 1000 Hz, and the filter inductor 2 are modulated by using carrier phase shift. Simulation verification is performed on this design case in a MatLab simulation platform. FIG. 2, FIG. 3, and FIG. 4 respectively provide simulation results of a wind farm output current, alternating current side currents of an auxiliary converter, and alternating current side currents of a diode rectifier. The wind farm enters a start-up phase at 0.2s, and the auxiliary converter supplies about 2 MW power to the wind farm, and the turbine begins to generate electricity at 0.7s. Port power of a converter station is gradually reversed. The wind farm enters an electricity generation state at 1.1s, and the auxiliary converter transmits about 2.5 MW power at 1.7s. In this case, after the wind farm finish start up, the auxiliary converter raises the alternating current side voltages, so that electricity generation power is transferred from the auxiliary converter to the diode rectifier, and the auxiliary converter performs reactive compensation and harmonic current compensation to the wind farm, and the system reaches 10% of rated electricity generation power at 4.7s.

The foregoing describes the specific embodiment of the present invention. It should be understood that, the present invention is not limited to the foregoing specific implementations, and a person skilled in the art can make various variations and modifications in the scope of the claims without affecting the essential content of the present invention. The embodiment of this application and features in the embodiment may be combined with each other randomly without conflict.

## Claims

1. A hybrid offshore wind farm direct current transmission converter, comprising:
a diode rectifier, wherein an alternating current side of the diode rectifier is configured to be connected
to a wind farm collection grid, and a direct current side of the diode rectifier is configured to be connected to a high-voltage direct current, HVDC, transmission line; and
an auxiliary converter, wherein the auxiliary converter is connected in parallel to the diode rectifier such as to be connectable to the wind farm collection grid and the HVDC transmission line,
wherein the auxiliary converter comprises:
a modular multilevel converter, MMC, wherein an alternating current side of the MMC is connected to the wind farm collection grid via a transformer; and
a submodule string, comprising a plurality of half-bridge submodules (1), wherein one end of the submodule string is connected to the MMC, and the other end is connected to the HVDC transmission line, **characterized in that**
the other end is connected to the HVDC transmission line via a midpoint of an LC filter circuit, wherein the filter circuit is formed by a filter inductor (2) and a filter capacitor (3), and the filter circuit is mounted on a direct current side of the auxiliary converter and is configured to prevent a high-frequency current inside the auxiliary converter from entering the HVDC transmission line, and wherein the filter capacitor is connected between an input end positive electrode and an input end negative electrode of the auxiliary converter.

2. The hybrid offshore wind farm direct current transmission converter according to claim 1, wherein a quantity of half-bridge submodules (1) of each bridge arm in the MMC is 8, an inductance of each bridge arm in the MMC is 1 mH, a rated value of a direct current output voltage of the MMC is 16 kV, and a rated value of an alternating current output voltage of the MMC is 6 kV.

3. The hybrid offshore wind farm direct current transmission converter according to claim 2, wherein the submodule string comprises 45 half-bridge submodules (1).

4. The hybrid offshore wind farm direct current transmission converter according to claim 3, wherein a rated voltage of the half-bridge submodule is 2 kV.

5. The hybrid offshore wind farm direct current transmission converter according to claim 4, wherein a rated value of a direct current output voltage of the submodule string is 84 kV.

6. The hybrid offshore wind farm direct current transmission converter according to claim 1, wherein the filter inductor (2) is 50 mH, and the filter capacitor (3) is 150 µF.

7. The hybrid offshore wind farm direct current transmission converter according to claim 1, wherein a switch frequency of an insulated gate bipolar transistor of the submodule string is 200 Hz, and a switch frequency of an insulated gate bipolar transistor of the MMC is 1000 Hz.

8. The hybrid offshore wind farm direct current transmission converter according to claim 1, wherein the diode rectifier is a 12-pulse diode rectifier, a 24-pulse diode rectifier, or a multiplex diode rectifier.

## Patentansprüche

1. Hybrider Gleichspannungsübertragungsumsetzer eines offshore-Windparks, wobei der Umsetzer umfasst:
eine Gleichrichterdiode, wobei eine Wechselspannungsseite der Gleichrichterdiode konfiguriert ist, um mit einem Sammelnetz eines Windparks verbunden zu werden, und wobei eine Gleichspannungsseite der Gleichrichterdiode konfiguriert ist, um mit einer Hochspannungs-Gleichspannungsübertragungsleitung, HVDC-Leitung, eines Windparks verbunden zu werden; und
einen Hilfsumsetzer, wobei der Hilfsumsetzer in Parallelschaltung mit der Gleichrichterdiode verbunden ist, um so mit dem Sammelnetz des Windparks und der HVDC-Übertragungsleitung verbindbar zu sein, wobei der Hilfsumsetzer umfasst:
einen modularen, mehrstufigen Umsetzer, MMC, wobei eine Wechselspannungsseite des MMC mit dem Sammelnetz des Windparks über einen Transformator verbunden ist; und
einen submodularen Strang, der mehrere Halbbrücken-Submodule (1) umfasst, wobei ein Ende des submodularen Strangs mit dem MMC verbunden ist, und das andere Ende mit der HVDC-Übertragungsleitung verbunden ist, **dadurch gekennzeichnet, dass**
das andere Ende mit der HVDC-Übertragungsleitung über einen Mittelpunkt eines LC-Filterschaltkreises verbunden ist, wobei der Filterschaltkreis durch eine Filterspule (2) und einen Filterkondensator (3) gebildet ist, und wobei der Filterschaltkreis auf einer Gleichspannungsseite des Hilfsumsetzers befestigt ist und dafür konfiguriert ist, um einen Hochfrequenzstrom innerhalb des Hilfsumsetzers daran zu hindern, in die HVDC-Übertragungsleitung einzutreten, und wobei der Filterkondensator zwischen einer positiven Eingangsendelektrode und einer negativen Eingangsendelektrode des Hilfsumsetzers verbunden ist.

2. Hybrider Gleichspannungsübertragungsumsetzer eines offshore-Windparks nach Anspruch 1, wobei eine Menge der Halbbrücken-Submodule (1) eines jeden Brückenarms in dem MMC den Betrag von 8 aufweist, eine Spule eines jeden Brückenarms in dem MMC den Betrag von 1 mH aufweist, ein Nennwert einer Ausgangsgleichspannung des MMC den Betrag von 16 kV aufweist und wobei ein Nennwert einer Ausgangswechselspannung des MMC den Betrag von 6 kV aufweist.

3. Hybrider Gleichspannungsübertragungsumsetzer eines offshore-Windparks nach Anspruch 2, wobei der submodulare Strang 45 Halbbrücken-Submodule (1) umfasst.

4. Hybrider Gleichspannungsübertragungsumsetzer eines offshore-Windparks nach Anspruch 3, wobei eine Nennspannung des Halbbrücken-Submoduls 2 kV aufweist.

5. Hybrider Gleichspannungsübertragungsumsetzer eines offshore-Windparks nach Anspruch 4, wobei ein Nennwert einer Ausgangsgleichspannung des submodularen Strangs 84 kV aufweist.

6. Hybrider Gleichspannungsübertragungsumsetzer eines offshore-Windparks nach Anspruch 1, wobei die Filterspule (2) 50 mH aufweist, und wobei der Filterkondensator (3) 150 µF aufweist.

7. Hybrider Gleichspannungsübertragungsumsetzer eines offshore-Windparks nach Anspruch 1, wobei eine Schaltfrequenz eines Bipolartransistors mit isolierter Steuerelektrode des submodularen Strangs 200 Hz aufweist, und wobei eine Schaltfrequenz eines Bipolartransistors mit isolierter Steuerelektrode des MMC 1.000 Hz aufweist.

8. Hybrider Gleichspannungsübertragungsumsetzer eines offshore-Windparks nach Anspruch 1, wobei die Gleichrichterdiode eine 12-Puls-Gleichrichterdiode, eine 24-Puls-Gleichrichterdiode oder eine Multiplex-Gleichrichterdiode ist.

## Revendications

1. Convertisseur de transmission de courant continu de parc éolien offshore, comprenant :
un redresseur à diode, dans lequel un côté de courant alternatif du redresseur à diode est configuré pour être connecté à une grille collectrice de parc éolien, et un côté de courant continu du redresseur à diode est configuré pour être connecté à une ligne de transmission de courant continu de haute tension HVDC ; et
un convertisseur auxiliaire, dans lequel le convertisseur auxiliaire est connecté en parallèle au redresseur à diode de manière à pouvoir être connecté à la grille collectrice de parc éolien et à la ligne de transmission HVDC,
dans lequel le convertisseur auxiliaire comprend :
un convertisseur multiniveaux modulaire, MMC, dans lequel un côté de courant alternatif du MMC est connecté à la grille collectrice de parc éolien via un transformateur ; et
une suite de sous-modules, comprenant une pluralité de sous-modules à demi-pont (1), dans lequel une extrémité de la suite de sous-modules est connectée au MMC, et l'autre extrémité est connectée à la ligne de transmission HVDC, **caractérisé en ce que**
l'autre extrémité est connectée à la ligne de transmission HVDC via un point médian d'un circuit de filtre LC, dans lequel le circuit de filtre est formé par une bobine d'inductance de filtre (2) et un condensateur de filtre (3), et le circuit de filtre est monté sur un côté de courant continu du convertisseur auxiliaire et est configuré pour empêcher un courant de haute fréquence à l'intérieur du convertisseur auxiliaire d'entrer dans la ligne de transmission HVDC, et dans lequel le condensateur de filtre est connecté entre une électrode positive d'extrémité d'entrée et une électrode négative d'extrémité d'entrée du convertisseur auxiliaire.

2. Convertisseur de transmission de courant continu de parc éolien offshore selon la revendication 1, dans lequel une quantité des sous-modules à demi-pont (1) de chaque branche de pont dans le MMC est de 8, une inductance de chaque branche de pont dans le MMC est de 1 mH, une valeur nominale d'une tension de sortie de courant continu du MMC est de 16 kV, et une valeur nominale d'une tension de sortie de courant alternatif du MMC est de 6 kV.

3. Convertisseur de transmission de courant continu de parc éolien offshore selon la revendication 2, dans lequel la suite de sous-modules comprend 45 sous-modules à demi-pont (1).

4. Convertisseur de transmission de courant continu de parc éolien offshore selon la revendication 3, dans lequel une tension nominale du sous-module à demi-pont est de 2 kV.

5. Convertisseur de transmission de courant continu de parc éolien offshore selon la revendication 4, dans lequel une valeur nominale d'une tension de sortie de courant continu de la suite de sous-modules est de 84 kV.

6. Convertisseur de transmission de courant continu de parc éolien offshore selon la revendication 1, dans lequel la bobine d'inductance de filtre (2) est de 50 mH, et le condensateur de filtre (3) est de 150 µF.

7. Convertisseur de transmission de courant continu de parc éolien offshore selon la revendication 1, dans lequel une fréquence de commutation d'un transistor bipolaire à grille isolée de la suite de sous-modules est de 200 Hz, et une fréquence de commutation d'un transistor bipolaire à grille isolée du MMC est de 1000 Hz.

8. Convertisseur de transmission de courant continu de parc éolien offshore selon la revendication 1, dans lequel le redresseur à diode est un redresseur à diode à 12 impulsions, un redresseur à diode à 24 impulsions, ou un redresseur à diode de multiplexage.
